# DEMANDE DE BREVET EUROPEEN

(11) **EP 1 030 479 A1**
(43) Date de publication de la demande: **23.08.2000**
(21) Numéro de dépôt: 00400233.3
(22) Date de dépôt: 31.01.2000
(51) Int. Cl.: H04J 14/02, G02B 6/34, H04Q 11/00

(54) **Dispositif de filtrage optique reconfigurable et multiplexeur d'extraction-insertion l'incorporant**

(30) Priorité: 18.02.1999 FR 9901983
(71) Demandeur: ALCATEL, 75008 Paris (FR)
(72) Inventeur: Bisson, Arnaud, 91400 Orsay (FR); Bruyere, Franck, 75014 Paris (FR); Noirie, Ludovic, 92220 Bagneux (FR)
(74) Mandataire: Fournier, Michel Robert Marie

(57) **Abrégé**

Pour effectuer notamment l'extraction et/ou l'insertion sélective de canaux d'un multiplex de longueurs d'onde, tout en minimisant les pertes, le dispositif comporte n filtres réjecteurs (F1-Fn) et des moyens de commutation (K) comprennent n+1 ports d'entrée (E0-En) de rang 0 à n et n+1 ports de sortie (S1-Sn+1) de rang 1 à n+1, ainsi qu'un ensemble de guides (Gk) permettant de coupler sélectivement chaque port de sortie (Sk) respectivement à un desdits ports d'entrée (Ei) ayant un rang inférieur. Chaque filtre est muni de premier et second ports opposés (Pe, Ps), couplés respectivement à un port de sortie associé (Sk) et à un port d'entrée associé (Ek) de même rang.

Application aux transmissions optiques, notamment pour réaliser des opérations de routage.

## Description

L'invention se situe dans le domaine des transmissions optiques utilisant le multiplexage en longueur d'onde. Elle a trait aux dispositifs de filtrage de longueurs d'onde et concerne plus particulièrement les filtres reconfigurables pour supprimer sélectivement un ou plusieurs canaux des multiplex. L'invention concerne également les dispositifs qui permettent sélectivement d'extraire et/ou d'insérer une partie au moins de ces canaux. De tels dispositifs sont habituellement appelés multiplexeurs d'extraction-insertion et peuvent utiliser avantageusement de tels filtres reconfigurables.

Dans les systèmes de transmission à multiplexage en longueur d'onde, plusieurs canaux sont véhiculés simultanément sur une même fibre, chacun de ces canaux étant porté par une onde associée ayant une longueur d'onde centrale et une largeur de bande déterminées. Notamment pour réaliser des fonctions de routage ou d'aiguillage, il est souvent nécessaire d'extraire certains canaux et de modifier le multiplex, par exemple pour modifier les informations véhiculées par un ou plusieurs canaux ou pour remplacer la longueur d'onde portant une information par une autre longueur d'onde.

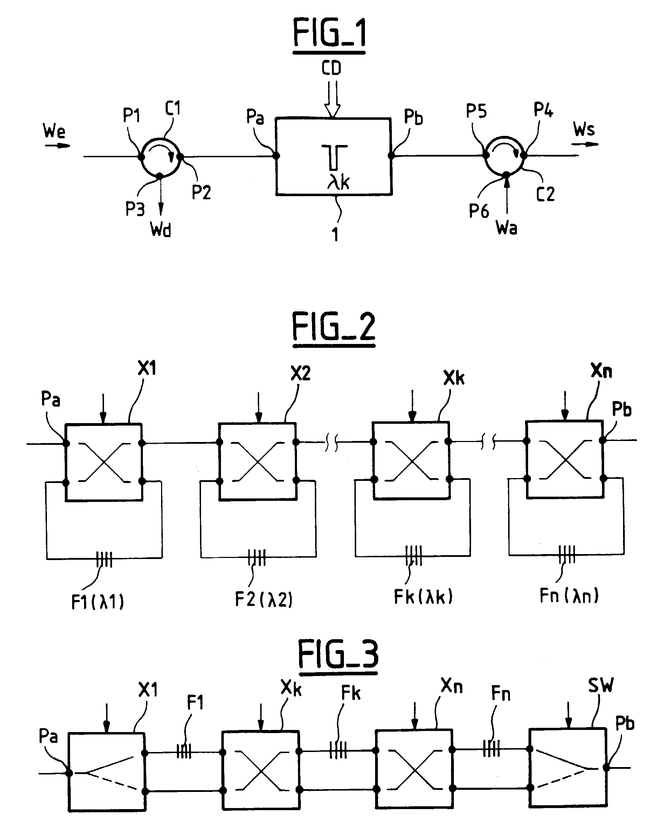

Comme schématisé sur la figure 1, pour réaliser un multiplexeur d'extraction-insertion on peut utiliser un filtre réjecteur 1 associé à des moyens de couplage d'extraction C1 et d'insertion C2. Le filtre est prévu pour supprimer en transmission au moins une des longueurs d'onde λk du multiplex, mais aussi pour la (les) réfléchir en direction des moyens de couplage d'extraction C1. Le multiplexeur d'extraction-insertion devient reconfigurable si le filtre est lui-même reconfigurable en fonction d'une commande CD de sélection de canaux.

Selon l'exemple représenté, le multiplexeur est essentiellement constitué du filtre reconfigurable 1 muni de deux ports d'accès opposés Pa, Pb. Les ports Pa et Pb sont couplés respectivement aux moyens de couplage d'entrée C1 et de sortie C2. Ces moyens de couplage sont ici des circulateurs à trois ports. Le circulateur d'entrée C1 comporte un port d'entrée P1 apte à recevoir un multiplex d'entrée We. Un second port P2 est couplé au premier port d'accès Pa du filtre 1. Un troisième port P3 constitue un port d'extraction. Le circulateur C1 est disposé de façon à permettre l'introduction du multiplex d'entrée We dans le filtre 1 par le premier port d'accès Pa, tandis que l'onde réfléchie Wd par le filtre 1 et sortant par ce même port Pa est reçue par le port P2 pour être prélevée par le port d'extraction P3.

De la même façon, le circulateur de sortie C2 comporte un premier port P5 couplé au filtre 1 par le second port d'accès Pb. Un second port P4 du circulateur C2 permet de prélever l'onde sortant du filtre par le port Pb. Le port P4 constitue un port de sortie permettant de prélever un multiplex de sortie Ws. Le circulateur C2 possède enfin un troisième port P6 qui constitue un port d'insertion.

En fonction de la commande CD appliquée, le filtre 1 est configuré pour présenter une bande ou un peigne de réjection calé sur une ou plusieurs longueur(s) d'onde λk déterminée(s) du multiplex.

En fonctionnement, un multiplex d'entrée We est introduit par le port d'entrée P1. Les canaux Wd du multiplex portés par les longueurs d'onde rejetées par le filtre sont alors extraits et accessibles par le port d'extraction P3. D'autre part, en injectant par le port d'insertion P6 de nouveaux signaux Wa portés par ces mêmes longueurs d'onde, on insère des canaux correspondants dans le multiplex de sortie Ws.

Des solutions classiques pour réaliser un filtre reconfigurable utilisent des filtres élémentaires fixes associés à des commutateurs optiques 2 vers 2 de type "crossbar".

La figure 2 en représente un premier exemple de réalisation envisageable.

Le filtre comporte n commutateurs 2 vers 2 : X1, X2, Xk, Xn montés en cascade de sorte qu'une des sorties de chaque commutateur soit reliée à une des entrées du commutateur suivant. Par ailleurs, la seconde entrée de chaque commutateur est reliée à sa seconde sortie par l'intermédiaire d'un filtre réjecteur associé F1, F2, Fk, Fn. Généralement, chacun de ces filtres est prévu pour réfléchir une seule des longueurs d'onde λ1, λk, λn du multiplex d'entrée We, mais pour certaines applications, on peut aussi utiliser des filtres réjecteurs de peignes de longueurs d'onde correspondant respectivement à des sous-ensembles déterminés de canaux.

Les commutateurs optiques 2 vers 2 comportent par exemple des guides optiques mobiles, tels que des segments de fibre, pouvant être à actionnement électromécanique, par exemple au moyen de micromoteurs électriques ou d'éléments piézo-électriques. Les couplages entre commutateurs utilisent des fibres optiques et les filtres réjecteurs peuvent être réalisés sous la forme de réseaux de Bragg photoinscrits dans les fibres de couplage.

La figure 3 représente un autre exemple de réalisation à base de commutateurs optiques 1 vers 2 : X1, 2 vers 2 : Xk, Xn, et 2 vers 1 : SW. Dans cet exemple, la seconde de sortie de chacun des n premiers commutateurs est reliée à la seconde entrée du commutateur suivant par l'intermédiaire d'un filtre réjecteur.

Comme nous le montrerons en détail dans la suite de la description, ces solutions présentent cependant l'inconvénient de ne pas être optimales quant aux pertes d'insertion introduites par les commutateurs.

L'invention a pour but de remédier à cet inconvénient. Dans ce but, l'invention a pour objet un dispositif de filtrage optique comportant n filtres réjecteurs calés sur des longueurs d'onde différentes ou des peignes de longueurs d'onde différents et des moyens de commutation optique à plusieurs états, aptes à coupler un signal optique d'entrée à l'un quelconque desdits filtres ou à plusieurs desdits filtres sélectivement couplés en cascade, ledit dispositif étant caractérisé en ce que lesdits moyens de commutation comprennent n+1 ports d'entrée de rang 0 à n et n+1 ports de sortie de rang 1 à n+1, ainsi qu'un ensemble de guides permettant de coupler sélectivement chaque port de sortie respectivement à un desdits ports d'entrée ayant un rang inférieur, en ce que chacun desdits filtres étant munis de premier et second ports opposés, le premier port et le second port de chaque filtre sont couplés respectivement à un port de sortie associé et à un port d'entrée associé de même rang desdits moyens de commutation et en ce que le port d'entrée de rang 0 est prévu pour recevoir ledit signal optique d'entrée et le port de sortie de rang n+1 est prévu pour délivrer un signal optique de sortie.

Les moyens de commutation peuvent être constitués d'un commutateur optique n+1 vers n+1 de type "crossbar" usuel. Néanmoins, cette solution n'est pas optimale du point de vue complexité et coût. En effet, un commutateur crossbar possède (n+1)! états possibles et doit permettre de coupler un port d'entrée quelconque à n'importe quel port de sortie, ce qui correspond à (n+1)² possibilités de liaisons optiques entre ports d'entrée et ports de sortie. Or, pour l'application envisagée, 2ⁿ états seulement suffisent car l'ordre de mise en cascade des filtres sélectionnés est indifférent. Cette observation entraîne des possibilités de simplification quant à la réalisation des moyens de commutation où il suffit en fait de prévoir (n+1)(n+2)/2 possibilités de liaisons optiques.

Ainsi, avec un commutateur crossbar statique usuel constitué de n+1 coupleurs 1 vers n+1 interconnectés à n+1 coupleurs n+1 vers 1 par l'intermédiaire de guides munis de portes optiques commandées, le nombre de guides utiles n'est en fait que (n+1)(n+2)/2. On peut donc réduire le nombre de guides et de portes en conséquence.

Plus précisément, selon une disposition avantageuse conforme à l'invention, lesdits moyens de commutation ne sont pas prévus pour pouvoir coupler chaque port de sortie auxdits ports d'entrée ayant un rang supérieur ou égal au rang de ce port.

De même, si on utilise un commutateur optique réalisé au moyen de guides optiques mobiles à actionnement électromécanique, un commutateur n+1 vers n+1 de type crossbar usuel nécessite de disposer n+1 guides du commutateur dans des plans distincts de façon à permettre que les guides se croisent. La réduction du nombre de possibilités de liaisons optiques à prévoir peut également être exploitée pour échapper à cette contrainte.

Ainsi, selon un autre aspect de l'invention les couplages entre lesdits filtres et lesdits moyens de commutation sont agencés de sorte qu'aucun guide dudit ensemble de n+1 guides ne croise un autre guide, quel que soit l'état desdits moyens de commutation.

Avantageusement, lesdits moyens de commutation sont agencés de sorte que chaque port d'entrée de rang k est placé en vis-à-vis du port de sortie de rang k+1.

L'invention a également pour objet un dispositif d'extraction et/ou d'insertion sélective d'un ou de plusieurs canaux d'un multiplex de longueurs d'onde et intégrant le dispositif de filtrage selon l'invention.

Le dispositif d'extraction et/ou d'insertion comprend :
- un dispositif de filtrage optique réjecteur réfléchissant muni de premier et second ports d'accès opposés et conforme au dispositif de filtrage selon l'invention,
- des moyens de couplage d'entrée couplés audit premier port d'accès et comprenant un port d'entrée apte à recevoir ledit multiplex et un port d'extraction, lesdits moyens de couplage d'entrée étant prévus pour injecter dans le filtre une partie au moins des ondes reçues par son port d'entrée et pour émettre par son port d'extraction une partie au moins des ondes reçues dudit premier port d'accès,
- des moyens de couplage de sortie couplés audit second port d'accès et comprenant un port de sortie et un port d'insertion, lesdits moyens de couplage de sortie étant prévus pour injecter dans le filtre une partie au moins des ondes reçues par son port d'insertion et pour émettre par son port de sortie une partie au moins des ondes reçues dudit second port d'accès.

Bien évidemment, l'invention concerne également les dispositifs d'extraction seule et les dispositifs d'insertion seule. Dans le premier cas, les moyens de couplage de sortie ne comportent pas de port d'insertion. Dans le second cas, les moyens de couplage d'entrée ne comportent pas de port d'extraction.

D'autres aspects et avantages de l'invention apparaîtront dans la suite de la description en référence aux figures.
- La figure 1 représente schématiquement un dispositif d'extraction-insertion déjà décrit précédemment.
- Les figures 2 et 3 représentent deux exemples de réalisation de filtres reconfigurables selon l'état de la technique et également déjà décrits précédemment.
- La figure 4 représente schématiquement un filtre reconfigurable selon l'invention.

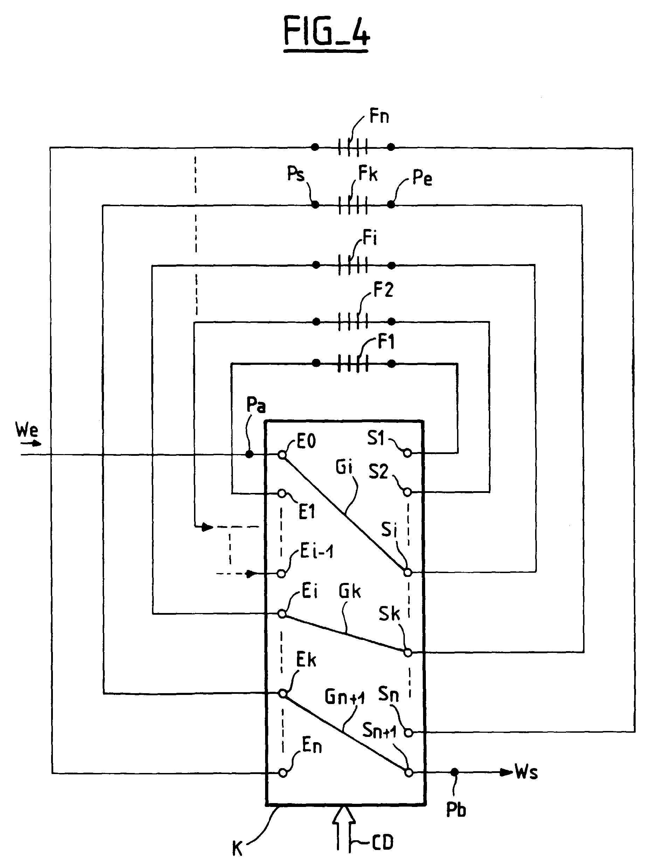

Le filtre représenté à la figure 4 est constitué d'un commutateur optique K et de n filtres réjecteurs F1, F2, Fi, Fk, Fn. Chaque filtre est prévu pour rejeter (et réfléchir pour les applications d'extraction-insertion) un ou plusieurs canaux d'un multiplex de longueurs d'onde We reçu.

Le commutateur K comprend n+1 ports d'entrée de rang 0 à n : E0, E1, Ei, Ek, En et n+1 ports de sortie de rang 1 à n+1 : S1, S2, Si, Sk, Sn+1.

Chacun des filtres, par exemple Fk, est muni de premier et second ports opposés Pe, Ps couplés respectivement à un port de sortie Sk et à un port d'entrée Ek de même rang du commutateur K.

Un ensemble de guides du commutateur K, tels que Gi, Gk, Gn+1, activés en fonction d'une commande appropriée CD permet de coupler sélectivement chaque port de sortie, par exemple Sk, à un des ports d'entrée, par exemple Ei, ayant un rang inférieur.

Le premier port d'entrée E0, de rang 0, est prévu pour recevoir le signal multiplex d'entrée We et le dernier port de sortie Sn+1, de rang n+1, est prévu pour délivrer un signal optique de sortie Ws.

Grâce à cette disposition, le commutateur K permet de coupler le signal d'entrée We à l'un quelconque des filtres ou à plusieurs de ces filtres sélectivement couplés en cascade. Par exemple, avec les positions représentées des guides Gi, Gk et Gn+1, le signal d'entrée We traverse les filtres Fi et Fk avant de ressortir par le port Sn+1. Il en résulte aussi que les canaux portés par les longueurs d'onde de réjection de ces filtres sont réfléchis vers le port E0.

La mise en oeuvre pratique du dispositif ne présente pas de difficultés particulières. Concernant le commutateur K, on peut adopter tout type de réalisation dérivée de celles des commutateurs crossbar connus et avantageusement en exploitant le fait que chaque port de sortie Sk n'a pas a être couplé aux ports d'entrée de rang supérieur ou égal Ek, Ek+1,...,En. Un tel commutateur crossbar est par exemple conforme à la série SG2000 commercialisée par la société JDS FITEL.

Comme déjà indiqué précédemment, il peut aussi s'agir d'un commutateur statique à base de coupleurs diffuseurs 1 vers N interconnectés à des coupleurs combineurs N' vers 1 par l'intermédiaire de portes optiques commandées. Dans ce cas, le nombre de guides d'interconnexion entre coupleurs et le nombre de portes optiques peut être réduit par rapport à une structure crossbar statique classique.

Si le commutateur est réalisé au moyen de guides optiques mobiles à actionnement électromécanique, on peut également simplifier la réalisation par rapport au crossbar usuel car avec une disposition appropriée des couplages des filtres avec le commutateur, il est possible d'éviter que les guides du commutateur se croisent et donc de les placer tous dans un même plan. Pour cela, il suffit par exemple que chaque port d'entrée de rang k soit placé en vis-à-vis du port de sortie de rang k+1. Une telle disposition apparaît sur la figure 4.

Concernant la réalisation des filtres, une solution commode consiste à réaliser des réseaux de Bragg photoinscrits dans des fibres.

Les pertes d'insertion introduites par le commutateur du dispositif de filtrage selon l'invention peuvent s'évaluer de la façon suivante.

On supposera pour simplifier que la perte élémentaire due au transfert de l'onde à travers un guide du commutateur est indépendante du guide considéré et prend la valeur ε.

Si D est le nombre de filtres traversés par l'onde We, k le rang d'un filtre particulier Fk traversé et d le nombre de filtres traversés en amont de ce filtre de rang k, on aura les pertes suivantes :
(D+1)ε, pour chacun des canaux non réfléchis et
2(d+1)ε, pour le canal réfléchi par le filtre de rang k.

A titre de comparaison, pour la réalisation de la figure 2, on a respectivement les pertes : (D+n)ε et 2(d+k)ε.

Pour la réalisation de la figure 3, on a respectivement les pertes : (1+n)ε et 2kε.

## Revendications

1. Dispositif de filtrage optique comportant n filtres réjecteurs (F1-Fn) calés sur des longueurs d'onde différentes ou des peignes de longueurs d'onde différents et des moyens de commutation optique (K) à plusieurs états, aptes à coupler un signal optique d'entrée (We) à l'un quelconque desdits filtres ou à plusieurs desdits filtres sélectivement couplés en cascade, ledit dispositif étant caractérisé en ce que lesdits moyens de commutation (K) comprennent n+1 ports d'entrée (E0-En) de rang 0 à n et n+1 ports de sortie (S1-Sn+1) de rang 1 à n+1, ainsi qu'un ensemble de guides (Gk) permettant de coupler sélectivement chaque port de sortie (Sk) respectivement à un desdits ports d'entrée (Ei) ayant un rang inférieur, en ce que chacun desdits filtres étant munis de premier et second ports opposés (Pe, Ps), le premier port (Pe) et le second port (Ps) de chaque filtre sont couplés respectivement à un port de sortie associé (Sk) et à un port d'entrée associé (Ek) de même rang desdits moyens de commutation (K) et en ce que le port d'entrée (E0) de rang 0 est prévu pour recevoir ledit signal optique d'entrée (We) et le port de sortie (Sn+1) de rang n+1 est prévu pour délivrer un signal optique de sortie (Ws).

2. Dispositif selon la revendication 1, caractérisé en ce que lesdits moyens de commutation (K) ne sont pas prévus pour pouvoir coupler chaque port de sortie (Sk) auxdits ports d'entrée ayant un rang supérieur ou égal au rang de ce port (Ek, Ek+1,...,En).

3. Dispositif selon la revendication 2, caractérisé en ce que lesdits moyens de commutation (K) comportant un ensemble de n+1 guides (Gk) mobiles permettant ledit couplage sélectif desdits ports de sortie (Sk) auxdits ports d'entrée (Ei), les couplages entre lesdits filtres et lesdits moyens de commutation (K) sont agencés de sorte qu'aucun guide dudit ensemble ne croise un autre guide, quel que soit l'état desdits moyens de commutation (K).

4. Dispositif selon la revendication 3, caractérisé en ce que lesdits moyens de commutation (K) sont agencés de sorte que chaque port d'entrée de rang k est placé en vis-à-vis du port de sortie de rang k+1.

5. Dispositif d'extraction sélective d'un ou de plusieurs canaux d'un multiplex (We) de longueurs d'onde comprenant :
- un dispositif de filtrage optique réjecteur réfléchissant (1) muni de premier et second ports d'accès opposés (Pa, Pb),
- des moyens de couplage d'entrée (C1) couplés audit premier port d'accès (Pa) et comprenant un port d'entrée (P1) apte à recevoir ledit multiplex (We) et un port d'extraction (P3), lesdits moyens de couplage d'entrée (C1) étant prévus pour injecter dans le dispositif de filtrage (1) une partie au moins des ondes reçues par son port d'entrée (P1) et pour émettre par son port d'extraction (P3) une partie au moins des ondes reçues dudit premier port d'accès (Pa),
- des moyens de couplage de sortie (C2) couplés audit second port d'accès (Pb),
caractérisé en ce que ledit dispositif de filtrage (1) est conforme au dispositif de filtrage selon l'une des revendications 1 à 4.

6. Dispositif d'insertion sélective d'un ou de plusieurs canaux d'un multiplex (We) de longueurs d'onde comprenant :
- un dispositif de filtrage optique réjecteur réfléchissant (1) muni de premier et second ports d'accès opposés (Pa, Pb),
- des moyens de couplage d'entrée (C1) couplés audit premier port d'accès (Pa) et apte à injecter dans le filtre (1) ledit multiplex (We),
- des moyens de couplage de sortie (C2) couplés audit port d'accès (Pb) et comprenant un port de sortie (P4) et un port d'insertion (P6), lesdits moyens de couplage de sortie (C2) étant prévus pour injecter dans le filtre (1) une partie au moins des ondes reçues par son port d'insertion (P6) et pour émettre par son port de sortie (P4) une partie au moins des ondes reçues dudit second port d'accès (Pb),
caractérisé en ce que ledit dispositif de filtrage est conforme au dispositif de filtrage selon l'une des revendications 1 à 4.

7. Dispositif d'extraction et/ou d'insertion sélective d'un ou de plusieurs canaux d'un multiplex (We) de longueurs d'onde comprenant :
- un dispositif de filtrage optique réjecteur réfléchissant (1) muni de premier et second ports d'accès opposés (Pa, Pb),
- des moyens de couplage d'entrée (C1) couplés audit premier port d'accès (Pa) et comprenant un port d'entrée (P1) apte à recevoir ledit multiplex (We) et un port d'extraction (P3), lesdits moyens de couplage d'entrée (C1) étant prévus pour injecter dans le filtre (1) une partie au moins des ondes reçues par son port d'entrée (P1) et pour émettre par son port d'extraction (P3) une partie au moins des ondes reçues dudit premier port d'accès (Pa),
- des moyens de couplage de sortie (C2) couplés audit second port d'accès (Pb) et comprenant un port de sortie (P4) et un port d'insertion (P6), lesdits moyens de couplage de sortie (C2) étant prévus pour injecter dans le filtre (1) une partie au moins des ondes reçues par son port d'insertion (P6) et pour émettre par son port de sortie (P4) une partie au moins des ondes reçues dudit second port d'accès (Pb),
caractérisé en ce que ledit dispositif de filtrage est conforme au dispositif de filtrage selon l'une des revendications 1 à 4.
